# EUROPÄISCHE PATENTSCHRIFT

(11) **EP 2 574 871 B1**
(45) Veröffentlichungstag und Bekanntmachung des Hinweises auf die Patenterteilung: **25.04.2018**
(21) Anmeldenummer: 12185875.7
(22) Anmeldetag: 25.09.2012
(51) Int. Cl.: F25D 29/00

(54) **Temperaturmesssystem**
Temperature measuring system
Système de mesure de la température

(30) Priorität: 27.09.2011 DE 102011115143
(43) Veröffentlichungstag der Anmeldung: 03.04.2013
(73) Patentinhaber: Wurm GmbH & Co. KG Elektronische Systeme, 42857 Remscheid (DE)
(72) Erfinder: Dreisbach, Heiko, 42781 Haan (DE); Wurm, Dr. Horst Peter, 42857 Remscheid (DE)
(74) Vertreter: Manitz Finsterwald Patentanwälte PartmbB

(56) Entgegenhaltungen:
- EP-A1- 1 059 706
- EP-A2- 1 479 988
- WO-A1-94/24727
- GB-A- 2 333 909
- US-A1- 2005 210 899
- US-A1- 2011 002 358

## Beschreibung

Die Erfindung betrifft ein Temperaturmesssystem für ein Kühlmöbel, in dem die Kühlung von Ware über gekühlte Luft erfolgt.

Zur Lagerung von zu kühlender Ware werden in Supermärkten Kühlmöbel verwendet. Die Kühlung der Ware erfolgt über gekühlte Luft, die über die Ware streicht. Das Kühlen der Luft erfolgt durch das Durchströmen eines kalten Verdampfers. Der Luftstrom der so abgekühlten Luft wird durch einen Lüfter angetrieben und tritt an einem Luftaustritt aus, um dann über die Ware zu streichen. Aufgewärmte und übrige Umgebungsluft werden an einem Lufteintritt eingesaugt und erneut zur Abkühlung über den Verdampfer geführt.

Als Kühlmöbel können insbesondere so genannte Kühlregale zum Einsatz gelangen, die an einer Frontseite tagsüber geöffnet sind und bei denen die zu kühlende Ware typischerweise auf mehreren horizontal oder geneigt ausgerichteten Tablaren ausgelegt wird. Bei den heute üblichen Kühlmöbeln, insbesondere bei den genannten Kühlregalen, handelt es sich in der Regel um Segmente, die zu einem kompletten Kühlmöbel in Reihe zusammengefügt sind. Hierdurch ergeben sich in der Praxis völlig unterschiedliche Längen der Kühlmöbel.

Für die Lagerung von Lebensmitteln gelten gesetzliche Vorschriften hinsichtlich der vorgeschriebenen Lagertemperaturen. Zur Gewährleistung der gesetzlichen Vorschriften ist die ständige Kontrolle der Temperatur erforderlich. Die Messung der Temperatur erfolgt üblicherweise durch Kabelfühler, von denen in der Regel zwei vorhanden sind. Einer misst die Temperatur am Luftaustritt (Zulufttemperatur), der andere die Temperatur am Lufteintritt (Rücklufttemperatur).

Problematisch hierbei ist, dass in dem Warenraum, d.h. in dem gekühlten Volumen innerhalb des Kühlmöbels, keine konstante Temperatur vorliegt, sondern eine Temperaturverteilung. Daher muss die reale Temperatur der Ware aus den beiden Messwerten für Zuluft- und Rücklufttemperatur ermittelt werden. Dies geschieht zum Beispiel durch eine Wichtungsfunktion, die für jedes Möbelfabrikat und abhängig von der Geometrie der Warentablare gesondert bestimmt werden muss. Außerdem sind Tag- und Nachtbetrieb des Kühlmöbels zu unterscheiden, da die Kühlmöbel in der Regel nachts durch ein Nachtrollo geschlossen sind und somit eine andere Luftzirkulation als im Tagbetrieb stattfindet.

Lokale Temperaturprobleme innerhalb des Kühlmöbels können desto schlechter erkannt werden, je weiter die Problemstelle von einer Temperaturmessstelle entfernt ist. Problematisch ist demnach ferner, dass sich die Temperaturmessstellen oftmals nicht im Warenraum des Kühlmöbels, sondern in den Luftkanälen befinden. Durch die große Entfernung der Temperaturmessstellen von den Waren und durch die geringe Anzahl der Messstellen kann die Warentemperatur nur unpräzise bestimmt werden.

GB 2 333 909 A1 beschreibt eine Kontrollvorrichtung für ein Kühlsystem mit Überwachungs- bzw. Kontrollgeräten, darunter Temperatursensoren, die über ein Flachbandkabel mit einer zentralen Kontrolleinheit verbunden sind. US 2005/0210899 A1 offenbart ein System zur zentralen Steuerung von Ventilen in verschiedenen Kühlbehältnissen, die mittels Temperatursensoren überwacht werden können. In EP 1 059 706 A1 wird ein Verbindungskabel für verschiedenartige elektronische Module beschrieben, die jeweils denselben Anschluss aufweisen.

Es ist eine Aufgabe, ein Temperaturmesssystem für Kühlmöbel zu schaffen, das eine präzise Messung der Temperatur im Warenraum über die gesamte Ausdehnung eines möglicherweise aus mehreren Segmenten bestehenden Kühlmöbels gewährleistet.

Diese Aufgabe wird durch ein Temperaturmesssystem mit den Merkmalen des Anspruchs 1 gelöst.

Das Temperaturmesssystem weist mehrere Temperaturmessmodule mit jeweils wenigstens einem Temperaturfühler auf, um im Warenraum des Kühlmöbels eine warennahe Messung der Umgebungstemperatur zu ermöglichen. Bei dem Temperatursignal des jeweiligen Temperaturfühlers handelt es sich somit um ein Messsignal, das die Temperatur der Umgebung des jeweiligen Temperaturfühlers repräsentiert. Der jeweilige Temperaturfühler ist außerhalb der elektrischen Anschlusseinrichtungen des Temperaturmessmoduls (z.B. Stecker, Buchse oder Kabelfortsatz) angeordnet, d.h. der jeweilige Temperaturfühler ist von den elektrischen Anschlusseinrichtungen beabstandet. Die von dem jeweiligen Temperaturfühler erzeugten Temperatursignale können über eine elektrische Verbindungseinrichtung des Temperaturmessmoduls an wenigstens eine der elektrischen Anschlusseinrichtungen ausgegeben werden, und von dieser beispielsweise an ein angeschlossenes Auswertemodul oder an ein benachbart angeschlossenes gleichartiges Temperaturmessmodul ausgegeben werden.

Da das jeweilige Temperaturmessmodul zwei elektrische Anschlusseinrichtungen aufweist, können mehrere gleichartige Temperaturmessmodule seriell zu einer Kette von variabler Länge miteinander gekoppelt werden (mit offenem Ende oder zu eine Schleife geschlossen). Hierdurch eignet sich das Temperaturmessmodul zur Bildung des erfindungsgemäßen Temperaturmesssystems, das flexibel an die in der Praxis vorhandenen unterschiedlichen Längen von in Reihe zusammengefügten Kühlmöbeln angepasst werden kann. Zu diesem Zweck kann die Länge des jeweiligen Temperaturmessmoduls insbesondere dem typischen Rastermaß der genannten Kühlmöbelsegmente entsprechen (z.B. 62,5 cm bzw. 125 cm).

Vorteilhafte Ausführungsformen der Erfindung sind in den abhängigen Ansprüchen und nachfolgend beschrieben.

Damit der Temperaturfühler des Temperaturmessmoduls die jeweilige Umgebungstemperatur besonders zuverlässig erfasst, ist es bevorzugt, dass der Temperaturfühler in möglichst direktem Temperaturaustausch mit der Umgebung steht, beispielsweise mit der gekühlten Luft und/oder einer Trägereinrichtung (z.B. Tablar) des zugeordneten Kühlmöbels. Um den Temperaturfühler vor Beschädigung oder Schmutz zu schützen, kann der Temperaturfühler hierbei allerdings mit einem dünnen Schutzüberzug, einem Verguss oder einer Hülse versehen sein, der bzw. die eine wärmeleitende Verbindung mit der Umgebung gewährleistet. Alternativ hierzu sind auch Schutzgitter denkbar, die eine konvektiv wärmeübertragende Verbindung zur Umgebungsluft ermöglichen.

Gemäß einer vorteilhaften Ausführungsform umfasst das Temperaturmessmodul mehrere Temperaturfühler. Eine erhöhte Anzahl an Temperaturfühlern je Temperaturmessmodul reduziert die Bereiche im Warenraum des Kühlmöbels, die zu weit von den Temperaturmessstellen (d.h. von den einzelnen Temperaturfühlern) entfernt sind, als dass eine zuverlässige Temperaturberechnung durchgeführt werden könnte. Ferner ist es hierdurch möglich, für mehrere Temperaturfühler eine einzige gemeinsame Ausleseschaltung zu verwenden, wie nachfolgend noch erläutert wird.

Hierbei sind die Temperaturfühler vorzugsweise so auf dem Temperaturmessmodul angeordnet, dass sie voneinander und von den elektrischen Anschlusseinrichtungen beabstandet sind. Bei einer Aneinanderreihung mehrerer Temperaturmessmodule ist auf diese Weise eine gleichmäßige Verteilung der Temperaturmessfühler über die gesamte Anreihung möglich. Befinden sich genau zwei Temperaturfühler auf einem Temperaturmessmodul, so ist es vorteilhaft, wenn der Abstand zwischen diesen beiden Temperaturfühlern der Hälfte der Modullänge entspricht. Auf diese Weise sind die Temperaturfühler mehrerer aneinander gereihter Temperaturmessmodule äquidistant zueinander. Sofern das Temperaturmessmodul drei oder mehr Temperaturfühler aufweist, sind diese vorzugsweise äquidistant voneinander beabstandet. Somit ergeben sich nicht nur zwischen benachbarten Temperaturmessmodulen, sondern auch innerhalb eines jeden Temperaturmessmoduls gleichmäßige Abstände der einzelnen Temperaturfühler. Durch die regelmäßige Verteilung der Temperaturfühler wird eine engmaschige Temperaturkontrolle innerhalb des Kühlmöbels sichergestellt.

Gemäß einer weiteren vorteilhaften Ausführungsform weist das jeweilige Temperaturmessmodul eine Längsform auf, wobei die beiden elektrischen Anschlusseinrichtungen an den beiden Enden der Längsform angeordnet sind, und wobei mehrere Temperaturfühler zwischen den beiden elektrischen Anschlusseinrichtungen entlang der Längsform des Temperaturmessmoduls verteilt angeordnet sind. Aufgrund dieser Anordnung ergibt sich bei Bildung des erläuterten Temperaturmesssystems (Aneinanderreihung mehrerer Temperaturmessmodule) über die Länge des Temperaturmesssystems eine im Wesentlichen gleichmäßige Verteilung der einzelnen Temperaturmessfühler.

Bei einer weiteren Ausführungsform ist das Temperaturmessmodul dazu ausgebildet, die Temperatursignale der mehreren Temperaturfühler als einen gemeinsamen Datensatz entlang der elektrischen Verbindungseinrichtung zu übertragen (z.B. an eine der beiden elektrischen Anschlusseinrichtungen). Beispielsweise kann eine gemeinsame Ausleseschaltung für die mehreren Temperaturfühler des jeweiligen Temperaturmessmoduls nach einem Signalübertragungsprotokoll arbeiten, welches einen derartigen gemeinsamen Datensatz vorsieht. Gerade bei dieser Ausführungsform ist es von Vorteil, dass die Reihenfolge der verschiedenen Temperatursignale innerhalb des Datensatzes der Reihenfolge der Temperaturfühler (d.h. der Anordnung) entlang des betreffenden Temperaturmessmoduls entspricht. Dies ermöglicht eine eindeutige Unterscheidung und eine inhärente räumliche Zuordnung der Temperatursignale zu den einzelnen Temperaturfühlern des jeweiligen Moduls, ohne dass eine individuelle Adressierung der Temperaturfühler erforderlich ist. Mit anderen Worten enthält der Datensatz aufgrund der Reihenfolge der verschiedenen Temperatursignale auch eine Ortsinformation hinsichtlich der zugrunde liegenden Temperaturfühler. Der genannte Datensatz muss jedoch nicht unbedingt als ein geschlossenes Datenpaket übertragen werden. Vielmehr kann die Übertragung (z.B. gemäß einem internen oder externen Takt) in kleineren Dateneinheiten erfolgen, die insbesondere einem einzigen jeweiligen Temperatursignal entsprechen können. Ferner kann während der Übertragung von einem Temperaturmessmodul zu einem nächsten Temperaturmessmodul die Größe des genannten Datensatzes variieren, insbesondere ansteigen, nämlich wenn die Anzahl der übertragenen Temperatursignale ansteigt.

In diesem Zusammenhang ist es vorteilhaft, dass das Temperaturmessmodul (insbesondere die elektrische Verbindungseinrichtung, die elektrischen Anschlusseinrichtungen und/oder die genannte gemeinsame Ausleseschaltung) dazu ausgebildet ist, die Temperatursignale lediglich entlang einer vorbestimmten Signalübertragungsrichtung zu übertragen. Hierdurch wird eine inhärente räumliche Zuordnung der Temperatursignale zu den einzelnen Temperaturfühlern des jeweiligen Moduls oder mehrerer Module unterstützt.

Ferner ist es in diesem Zusammenhang bevorzugt, wenn sich die erste elektrische Anschlusseinrichtung eines jeweiligen Temperaturmessmoduls mit der zweiten elektrischen Anschlusseinrichtung eines gleichartigen anderen Temperaturmessmoduls in Verbindung bringen lässt, ohne dass die erste elektrische Anschlusseinrichtung des betreffenden Temperaturmessmoduls mechanisch und elektrisch mit der ersten elektrischen Anschlusseinrichtung des gleichartigen anderen Temperaturmessmoduls verbunden werden kann. Mit anderen Worten sind bei dieser Ausführungsform die erste und die zweite elektrische Anschlusseinrichtung unterschiedlich ausgebildet (zum Beispiel als Stecker und Buchse), um auf diese Weise die Ausrichtung der Temperaturmessmodule zu kodieren. Insbesondere kann hierdurch auch festgelegt werden, dass die erste elektrische Anschlusseinrichtung des jeweiligen Temperaturmessmoduls lediglich als Signaleingang dient und die zweite elektrische Anschlusseinrichtung des jeweiligen Temperaturmessmoduls lediglich als Signalausgang dient. Die Art der mechanischen und elektrischen Verbindung zweier Anschlusseinrichtungen kann eine unmittelbare Kopplung darstellen oder auch eine indirekte Verbindung, die über Zwischenstecker und/oder Zwischenkabel erfolgt.

Zur Versorgung des jeweiligen Temperaturfühlers mit Energie sowie zum Auslesen des von dem jeweiligen Temperaturfühler erzeugten Temperatursignals ist es vorteilhaft, wenn die elektrische Verbindungseinrichtung eine oder mehrere Energieversorgungsleitungen und/oder eine oder mehrere Signalübertragungsleitungen umfasst. Dabei können die Signalübertragungsleitung und die Energieversorgungsleitung auch eine Einheit bilden.

Da zumindest die Temperaturfühler des jeweiligen Temperaturmessmoduls zum Zwecke eines effizienten Wärmeaustauschs mit der Umgebung frei zugänglich im Warenraum des Kühlmöbels angeordnet sein können und da auch ein hinreichender Schutz gegenüber Feuchtigkeit innerhalb des Warenraums gewährleistet sein muss, wird das Temperaturmessmodul vorzugsweise lediglich mit Kleinspannung betrieben, insbesondere mit Gleichspannung.

Werden die mehreren Temperaturmessmodule zu einer Reihe zusammengeschaltet, müssen die Signale der einzelnen Temperaturfühler der Temperaturmessmodule an die elektrischen Anschlusseinrichtungen und von Modul zu Modul übertragen werden. Bevorzugt erfolgt dies durch eine digitale serielle Signalübertragung. Alternativ hierzu ist auch eine digitale parallele Signalübertragung oder eine analoge Signalübertragung möglich, insbesondere über eine entsprechende Anzahl von parallelen Signalübertragungsleitungen.

Sofern wie vorstehend erläutert das jeweilige Temperaturmessmodul mehrere Temperaturfühler aufweist, kann das Temperaturmessmodul eine gemeinsame Ausleseschaltung umfassen, die beispielsweise sternförmig mit den mehreren Temperaturfühlern verbunden ist. Vorzugsweise ist eine derartige Ausleseschaltung über einen Eingang und über einen hiervon separaten Ausgang mit der genannten elektrischen Verbindungseinrichtung des Temperaturmessmoduls verbunden. Die Ausleseschaltung bildet dann also eine Schnittstelle zwischen den Temperaturfühlern und der elektrischen Verbindungseinrichtung. Somit müssen die Signale der mehreren Temperaturfühler nicht gesondert an die elektrischen Anschlusseinrichtungen übertragen werden.

Wie bereits erläutert ermöglicht das von einer derartigen Ausleseschaltung verwendete Signalübertragungsprotokoll vorzugsweise eine eindeutige Unterscheidung und räumliche Zuordnung der Temperatursignale zu den einzelnen Temperaturfühlern des jeweiligen Moduls und auch eines jeden einzelnen Moduls innerhalb eines Systems verschalteter Temperaturmessmodule. Dies kann beispielsweise nach Art eines Schieberegisters realisiert werden: In einem festen oder einstellbaren Takt oder ausgelöst durch einen externen gemeinsamen Taktgeber gibt die Ausleseschaltung die Temperatursignale der einzelnen Temperaturfühler des jeweiligen Temperaturmessmoduls in einer Reihenfolge an die elektrische Verbindungseinrichtung aus, die der Anordnung der Temperaturfühler an dem Temperaturmessmodul entspricht. Sind die mehreren Temperaturmessmodule des Temperaturmesssystems in Form einer Kette verschaltet, ergänzt die Ausleseschaltung eines Moduls innerhalb der Kette einen eingangsseitig empfangenen Datensatz auf diese Weise um die Temperatursignale der Temperaturfühler des betreffenden Modules entsprechend der räumlichen Reihenfolge. Somit verbinden sich die Schieberegister der einzelnen Module zu einem einzigen großen Schieberegister. Zum Taktzeitpunkt geben die Ausleseschaltungen der einzelnen Module die Temperatursignale der jeweiligen Temperaturfühler von Modul zu Modul weiter, so dass am Ende der Kette das gesamte Schieberegister ausgelesen werden kann. Die Richtung der Signalweitergabe kann durch unterschiedliche Ausführungen der ersten und zweiten elektrischen Anschlusseinrichtung und deren Verbindung über die elektrische Verbindungseinrichtung mit dem Eingang oder dem Ausgang der Ausleseschaltung innerhalb jedes einzelnen Temperaturmessmoduls kodiert sein.

Dieses Prinzip der inhärenten räumlichen Zuordnung der Temperatursignale setzt im Falle der Verbindung mehrerer seriell verschalteter Temperaturmessmodule des Temperaturmesssystems nicht unbedingt voraus, dass jedes Temperaturmessmodul mehrere Temperaturfühler aufweist. Generell zeichnet sich die Erfindung vielmehr dadurch aus, dass die Temperaturmessmodule des Temperaturmesssystems dazu konfiguriert sind, die Temperatursignale als Datensatz lediglich entlang einer gemeinsamen vorbestimmten Signalübertragungsrichtung zu übertragen, wobei der von einem jeweiligen Temperaturmessmodul übertragene Datensatz das Temperatursignal (oder die Temperatursignale) dieses Temperaturmessmoduls und das jeweilige Temperatursignal (oder die Temperatursignale) der vorangehenden Temperaturmessmodule (bezogen auf die vorbestimmte Signalübertragungsrichtung) enthält. Die Reihenfolge der Temperatursignale innerhalb des jeweiligen Datensatzes entspricht hierbei der Reihenfolge der Temperaturfühler und der Reihenfolge der Temperaturmessmodule entlang der gebildeten Kette von Temperaturmessmodulen.

Zur Verwirklichung der inhärenten räumlichen Zuordnung der Temperatursignale ist es bei Temperaturmessmodulen mit mehreren Temperaturfühlern zwar möglich, jedoch nicht zwingend erforderlich, eine gemeinsame Ausleseschaltung für die mehreren Temperaturfühler vorzusehen. Stattdessen kann jeder einzelne Temperaturfühler zugleich eine Kommunikationsschnittstelle (Eingang/Ausgang) für eine Signalübertragung zu dem jeweils benachbarten Temperaturfühler nach Art eines wie vorstehend erläuterten Schieberegisters bilden. Die elektrische Verbindungseinrichtung entlang der Länge des Temperaturmessmoduls stellt dabei abschnittsweise eine jeweilige Punkt-zu-Punkt-Verbindung entweder zwischen einer der elektrischen Anschlusseinrichtungen und dem jeweiligen benachbarten Temperaturfühler oder zwischen zwei benachbarten Temperaturfühlern dar. Zusätzlich kann die elektrische Verbindungseinrichtung eine durchgehende Taktleitung für ein gemeinsames externes Taktsignal umfassen.

In einer alternativen vorteilhaften Ausführungsform erstreckt sich eine Busleitung entlang der gesamten Länge eines Temperaturmessmoduls. Die Busleitungen mehrerer verschiedener Temperaturmessmodule, die aneinander gereiht sind, verbinden sich in diesem Fall zu einer durch das ganze System verschalteter Temperaturmessmodule verlaufenden Busleitung. Jeder Temperaturfühler eines Temperaturmessmoduls ist über eine jeweilige Busanschlussschaltung unmittelbar an die Busleitung angeschlossen, wobei die Busanschlussschaltungen eine individuelle Adressierung ermöglichen.

Die Erfindung bezieht sich auf ein Temperaturmesssystem, das eine Kette variabler Länge von mehreren Temperaturmessmodulen aufweist, welche über ihre jeweiligen elektrischen Anschlusseinrichtungen seriell miteinander verschaltet sind. Auf diese Weise sind die elektrischen Verbindungseinrichtungen der verschiedenen Temperaturmessmodule miteinander zu einer gemeinsamen elektrischen Verbindungseinrichtung verbunden, die die beiden Enden der gebildeten Kette signaltechnisch und/oder energietechnisch durchgehend miteinander verbindet. Bevorzugt sind die zu einer Kette verschalteten Temperaturmessmodule innerhalb des Warenraums eines Kühlmöbels angeordnet, das insbesondere aus mehreren Segmenten zusammengesetzt sein kann. Die gebildete Kette kann offen oder geschlossen sein.

Vorzugsweise weist ein derartiges Temperaturmesssystem aus miteinander verschalteten Temperaturmessmodulen ein Auswertemodul auf, über das die Temperatursignale sämtlicher Temperaturfühler der gebildeten Kette individuell ausgelesen werden können. Dieses Auswertemodul lässt sich an ein Ende der Kette von Temperaturmessmodulen anschließen. Das Auswertemodul kann mit einer Reglereinheit des Kühlmöbels verbunden oder ein integraler Teil einer derartigen Reglereinheit sein. Auf diese Weise kann die Reglereinheit des Kühlmöbels die individuellen Temperatursignale der einzelnen Temperaturfühler auswerten und zur Regelung und Analyse von Problemfällen heranziehen.

Die Erfindung bezieht sich außerdem auf ein Kühlmöbel mit einem derartigen Temperaturmesssystem.

Die Erfindung wird nachfolgend lediglich beispielhaft unter Bezugnahme auf die Zeichnungen erläutert.
- Figur 1: zeigt eine schematische Seitenansicht eines Kühlregals.
- Figuren 2a und 2b: zeigen verschiedene Ausführungsformen eines Temperaturmessmoduls in einer jeweiligen schematischen Draufsicht.
- Figuren 3a bis 3e: zeigen verschiedene Ausführungsformen eines Temperaturmessmoduls in einer jeweiligen schematischen Seitenansicht.
- Figur 4a und 4b: zeigen verschiedene Ausführungsformen eines Temperaturmesssystems jeweils mit mehreren aneinander gereihten Temperaturmessmodulen und einem angeschlossenen Auswertemodul.

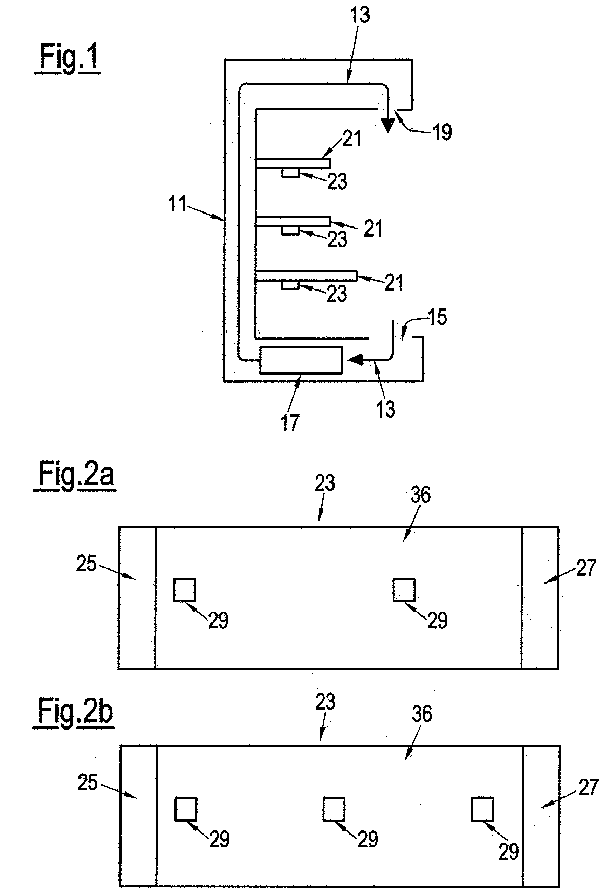

In Figur 1 ist in einer schematischen Seitenansicht ein Kühlmöbel 11 dargestellt, wie es typischerweise in einem Lebensmittelmarkt zur Anwendung kommt. Es handelt sich hier um ein an seiner Frontseite offenes Kühlmöbel 11. Die Kühlung der in dem Kühlmöbel 11 befindlichen Ware erfolgt über einen zirkulierenden Luftstrom 13, der durch einen Lufteintritt 15 angesaugt wird, über einen Verdampfer 17 abgekühlt wird, und schließlich über einen Luftaustritt 19 wieder austritt. Die gekühlte Luft streicht dann über Warentablare 21 und kühlt auf diese Weise die Ware.

Im Inneren des Kühlmöbels 11 nahe der Ware auf den Warentablaren 21 sind Temperaturmessmodule 23 angebracht. Diese können zum Beispiel mittels Montageclips an der Unterseite eines Warentablars 21 befestigt sein. Die flexible Wahl der Position der Anbringung der Temperaturmessmodule 23 ermöglicht eine lokal präzise Messung der Temperatur im Warenraum des Kühlmöbels 11. Die Temperaturmessmodule 23 können starr oder flexibel ausgeführt sein.

Figuren 2a und 2b zeigen verschiedene Ausführungsformen eines einzelnen Temperaturmessmoduls 23. Das Temperaturmessmodul 23 weist eine Längsform auf und besitzt an dem einen Ende der Längsform eine erste elektrische Anschlusseinrichtung 25, an dem anderen Ende eine zweite elektrische Anschlusseinrichtung 27 (z.B. Stecker und Buchse). Die erste elektrische Anschlusseinrichtung 25 und die zweite elektrische Anschlusseinrichtung 27 sind somit räumlich getrennt voneinander an dem Temperaturmessmodul 23 angeordnet. Auf dem Temperaturmessmodul 23 sind entlang der Längsform des Moduls zwischen der ersten elektrischen Anschlusseinrichtung 25 und der zweiten elektrischen Anschlusseinrichtung 27 mehrere Temperaturfühler 29 verteilt angeordnet, d.h. beabstandet voneinander und beabstandet von der ersten elektrischen Anschlusseinrichtung 25 und der zweiten elektrischen Anschlusseinrichtung 27. Es kann sich dabei wie in Figur 2a um zwei Temperaturfühler 29 oder wie in Figur 2b um drei oder um eine andere Anzahl von Temperaturfühlern 29 handeln. Die Temperaturfühler 29 erzeugen ein jeweiliges Temperatursignal, das die Temperatur der Umgebung des jeweiligen Temperaturfühlers 29 repräsentiert. Die Temperatursignale können dazu genutzt werden, den Kühlkreislauf des Kühlmöbels 11 besser zu regeln und gesetzliche Anforderungen an die Temperatur innerhalb des Kühlmöbels 11 zuverlässig einzuhalten. Durch die verteilte Anordnung der Temperaturfühler 29 wird die Genauigkeit der Messung der Temperaturverteilung entlang der Länge des Temperaturmessmoduls 23 optimiert.

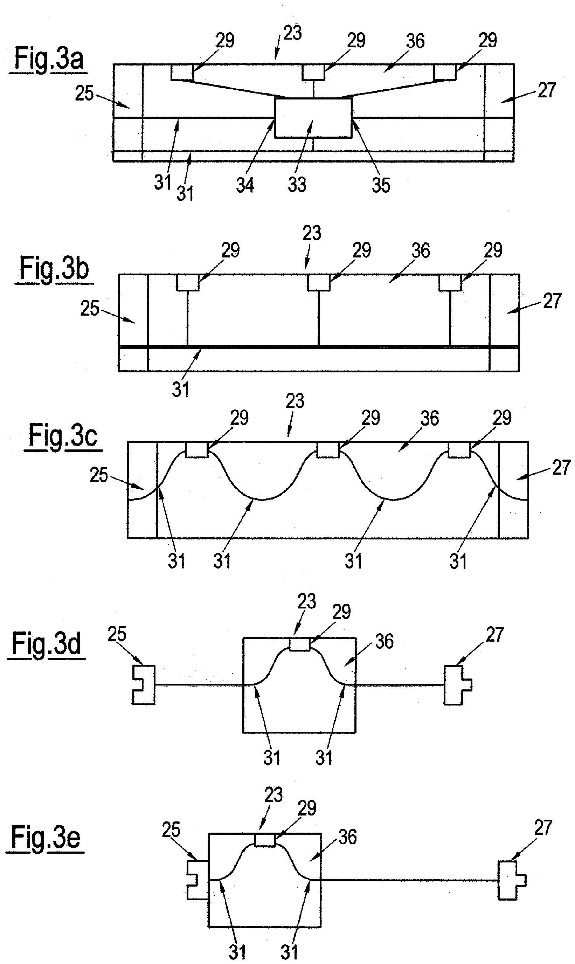

In Figuren 3a bis 3e sind verschiedene Ausführungsformen des Temperaturmessmoduls 23 in Seitenansicht gezeigt. Die Temperaturmessmodule 23 umfassen in Figuren 3a bis 3c an ihrer Oberseite jeweils drei, in Figuren 3d und 3e einen einzigen Temperaturfühler 29. Ferner weisen die Temperaturmessmodule 23 an ihren Enden eine erste elektrische Anschlusseinrichtung 25 und eine zweite elektrische Anschlusseinrichtung 27 auf.

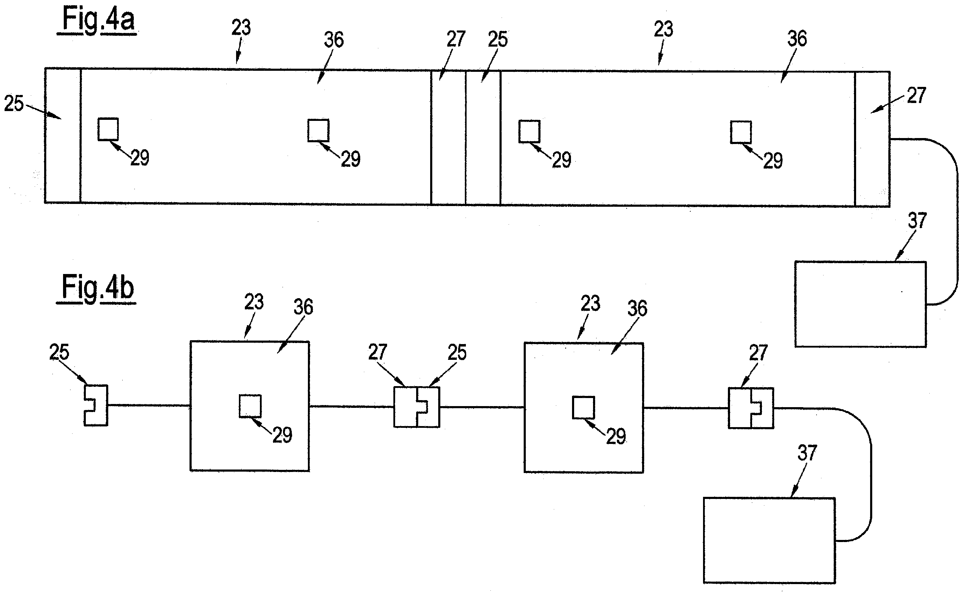

Figur 3a zeigt eine Ausführungsform, bei der die Temperaturfühler 29 mit einer gemeinsamen Ausleseschaltung 33 verbunden sind, die die Signale der mehreren Temperaturfühler 29 ausliest. Die Ausleseschaltung 33 ist über einen Eingang 34 und einen Ausgang 35 mit einer elektrischen Verbindungseinrichtung 31 verbunden. Anstelle der in Figur 3a gezeigten sternförmigen Anordnung können die einzelnen Temperaturfühler 29 auch auf andere Weise mit der Ausleseschaltung 33 verbunden sein, beispielsweise nach Art eines lokalen Busses. Von der elektrischen Verbindungseinrichtung 31 empfängt die Ausleseschaltung 33 am Eingang 34 Temperatursignale beispielsweise von benachbarten Temperaturmessmodulen 23 (vgl. Figuren 4a und 4b). Über den Ausgang 35 gibt die Ausleseschaltung 33 an die elektrische Verbindungseinrichtung 31 die empfangenen Temperatursignale und zusätzlich die Signale der eigenen Temperaturfühler 29 aus. Die Signalübertragung kann hierbei nach Art eines Schieberegisters erfolgen, d.h. das Empfangen von Temperatursignalen am Eingang 34 der Ausleseschaltung 33 kann simultan zu dem Ausgeben von Temperatursignalen am Ausgang 35 erfolgen, wobei letztlich ein einziger Datensatz durch die Ausleseschaltung 33 getaktet wird. Die Ausleseschaltung 33 kann wie in Figur 3a gezeigt weitere Verbindungen mit der elektrischen Verbindungseinrichtung 31 aufweisen, die beispielsweise der Energieversorgung oder dem Empfang eines Taktsignals dienen. Die elektrische Verbindungseinrichtung 31 ist in Figur 3a mit zwei Adern dargestellt, kann aber auch mehr aufweisen.

Bei dem in Figur 3b dargestellten Temperaturmessmodul 23 ist die elektrische Verbindungseinrichtung 31 als Busleitung ausgeführt, mit der jeder Temperaturfühler 29 direkt verbunden ist. Dies ermöglicht eine individuelle Adressierung der einzelnen Temperaturfühler 29. Abweichend von der Darstellung in Figur 3b kann die die elektrische Verbindungseinrichtung 31 natürlich wiederum zwei oder mehr Adern aufweisen.

Figur 3c zeigt eine Ausführungsform, bei der die elektrische Verbindungseinrichtung 31 vom einen Ende des Temperaturmessmoduls 23 mit der ersten elektrischen Anschlusseinrichtung 25 ausgehend nacheinander über die Temperaturfühler 29 hin zum anderen Ende mit der zweiten elektrischen Anschlusseinrichtung 27 führend als jeweilige Punkt-zu-Punkt-Verbindungen ausgeführt ist. Hierfür besitzt jeder Temperaturfühler 29 (oder eine zugeordnete jeweilige Schnittstellenschaltung) vorzugsweise einen Eingang und einen hiervon separaten Ausgang (in Figur 3c nicht gezeigt). Auch bei einer solchen Ausführung erfolgt die Signalübertragung vorzugsweise nach Art eines Schieberegisters.

Die erste und zweite elektrische Anschlusseinrichtung 25, 27 eines Temperaturmessmoduls 23 müssen nicht unmittelbar an das Gehäuse 36 des Temperaturmessmoduls 23 angeschlossen oder in dieses integriert sein, sondern sie können wie in Figuren 3d und 3e gezeigt mit dem übrigen Modul 23 bzw. mit dem Gehäuse 36 über Kabel verbunden sein, in denen die elektrische Verbindungseinrichtung 31 verläuft. Beispielsweise umfassen in Figur 3d die erste elektrische Anschlusseinrichtung 25 einen Kabelfortsatz mit einer Buchse und die zweite elektrische Anschlusseinrichtung 27 einen Kabelfortsatz mit einem Stecker. Die Längen der Verbindungen der ersten elektrischen Anschlusseinrichtung 25 und der zweiten elektrischen Anschlusseinrichtung 27 mit dem Gehäuse 36 des Temperaturmessmoduls 23 können wie in Figur 3d gezeigt identisch sein oder sich wie in Figur 3e gezeigt unterscheiden. Vorzugsweise sind die erste und zweite elektrische Anschlusseinrichtung 25, 27 unterschiedlich ausgeführt. Auf diese Weise kann bei serieller Verschaltung mehrerer Temperaturmessmodule 23 zu einem Temperaturmesssystem die gleiche Orientierung aller Temperaturmessmodule 23 entlang der gebildeten Kette sichergestellt werden.

Die Energieversorgung der Temperaturfühler 29 und der Ausleseschaltung 33 (Figur 3a) erfolgt über eine Energieversorgungsleitung, die sich ebenfalls zwischen den beiden elektrischen Anschlusseinrichtungen 25, 27 erstreckt. Diese Energieversorgungsleitung bildet vorzugsweise eine Einheit mit der gezeigten elektrischen Verbindungseinrichtung 31, d.h. die Temperatursignale werden in diesem Fall zugleich über die Energieversorgungsleitung übermittelt.

Wie in Figuren 3a bis 3e gezeigt bildet jedes Temperaturmessmodul 23 eine funktional und physisch geschlossene Einheit zumindest bestehend aus einem oder mehreren Temperaturfühlern 29, einer ersten elektrischen Anschlusseinrichtung 25, einer zweiten elektrischen Anschlusseinrichtung 27 und einer elektrischen Verbindungseinrichtung 31.

Vorzugsweise lassen sich wie in Figuren 4a und 4b gezeigt mehrere Temperaturmessmodule 23 miteinander zu einem Temperaturmesssystem verbinden, wobei die erste elektrische Anschlusseinrichtung 25 eines Temperaturmessmoduls 23 mit der zweiten elektrischen Anschlusseinrichtung 27 eines anderen Temperaturmessmoduls 23 gekoppelt wird. Die erste elektrische Anschlusseinrichtung 25 und die zweite elektrische Anschlusseinrichtung 27 können dabei identisch (Figur 4a) oder unterschiedlich (Figur 4b) aufgebaut sein. Durch die serielle Verschaltung mehrerer Temperaturmessmodule 23 zu einer Kette von Modulen kann ein flexibel an die Länge des Kühlmöbels 11 angepasstes Temperaturmesssystem realisiert werden. Sofern innerhalb einer derartigen Kette das jeweilige Temperaturmessmodul 23 eine Längsform aufweist und die erste elektrische Anschlusseinrichtung 25 und die zweite elektrische Anschlusseinrichtung 27 an den beiden Enden der Längsform vorgesehen sind, ergibt sich die in Figuren 4a und 4b gezeigte Längserstreckung des Temperaturmesssystems. Hierzu eignet sich das jeweilige Temperaturmesssystem besonders gut für eine Anordnung entlang des Warenraums eines Kühlmöbels oder mehrerer in Reihe zusammengefügter Kühlmöbel. Bezogen auf die Seitenansicht gemäß Figur 1 bedeutet dies, dass jedes in Figur 1 gezeigte Temperaturmessmodul 23 einer eigenen derartigen Kette entspricht, d.h. für jedes Warentablar 21 ist ein eigenes Temperaturmesssystem von variabler Länge vorgesehen.

Es ist zudem mithilfe von (nicht gezeigten) Überbrückungskabeln mit geeigneten Anschlüssen möglich, eine erste elektrische Anschlusseinrichtung 25 eines Temperaturmessmoduls 23 mit einer zweiten elektrischen Anschlusseinrichtung 27 eines anderen Temperaturmessmoduls 23 über eine Distanz hinweg miteinander zu verbinden. Durch derartiges Einfügen von Abständen zwischen Temperaturmessmodulen 23 eines Temperaturmesssystems können, beispielsweise aus Kostengründen, gewisse Bereiche entlang der Kette verschalteter Temperaturmessmodule 23 von der Temperaturmessung ausgespart werden, beispielsweise in Längsrichtung des Kühlmöbels. Außerdem lassen sich somit mehrere Temperaturmesssysteme, die an Warentablaren 21 verschiedener Höhe angebracht oder aus anderen Gründen voneinander beabstandet sind, zu einem längeren Temperaturmesssystem verbinden. Neuerlich bezogen auf die Seitenansicht gemäß Figur 1 bedeutet dies, dass die in Figur 1 gezeigten, in vertikaler Richtung beabstandeten Temperaturmessmodule 23 zu einer einzigen Kette gekoppelt werden können.

Durch die Art der Verschaltung der Temperaturfühler 29 der Temperaturmessmodule 23 über die jeweilige elektrische Verbindungseinrichtung 31 und durch das verwendete Protokoll zur Signalübertragung wird sichergestellt, dass die Temperatursignale der einzelnen Temperaturfühler 29 eindeutig der Position der Temperaturfühler 29 innerhalb des Kühlmöbels 11 zugeordnet werden können. Besonders vorteilhaft ist dabei eine Ausführung nach Figuren 3a und 3c bis 3e, da hier eine eindeutige Zuordnung erfolgen kann, ohne dass eine Adressierung der Temperaturmessmodule 23 oder der Temperaturfühler 29 notwendig wäre.

An ein Ende des Temperaturmesssystems lässt sich ein Auswertemodul 37 anschließen. Mit dessen Hilfe ist es möglich, sämtliche von dem Temperaturmesssystem gemessenen Temperatursignale auszulesen und eindeutig einem jeweiligen Temperaturfühler 29 zuzuordnen. Ausgangsseitig kann das Auswertemodul 37 mit einer Reglereinheit des Kühlmöbels 11 (Figur 1) verbunden werden, die den Kühlkreislauf des Kühlmöbels 11 in Abhängigkeit unter anderem von den genannten Temperatursignalen regelt. Das Auswertemodul 37 kann dabei natürlich in die Reglereinheit integriert sein.

### Bezugszeichenliste

- 11: Kühlmöbel
- 13: Luftstrom
- 15: Lufteintritt
- 17: Verdampfer
- 19: Luftaustritt
- 21: Warentablar
- 23: Temperaturmessmodul
- 25: erste elektrische Anschlusseinrichtung
- 27: zweite elektrische Anschlusseinrichtung
- 29: Temperaturfühler
- 31: elektrische Verbindungseinrichtung
- 33: Ausleseschaltung
- 34: Eingang
- 35: Ausgang
- 36: Gehäuse
- 37: Auswertemodul

## Patentansprüche

1. Temperaturmesssystem für ein Kühlmöbel (11), in dem die Kühlung von Ware über gekühlte Luft (13) erfolgt, mit mehreren Temperaturmessmodulen,
wobei das jeweilige Temperaturmessmodul (23) eine erste elektrische Anschlusseinrichtung (25) und eine zweite elektrische Anschlusseinrichtung (27) aufweist, wobei eine elektrische Verbindungseinrichtung (31) die erste elektrische Anschlusseinrichtung (25) und die zweite elektrische Anschlusseinrichtung (27) miteinander verbindet, und wobei das jeweilige Temperaturmessmodul (23) außerhalb der beiden elektrischen Anschlusseinrichtungen (25,27) wenigstens einen Temperaturfühler (29) zur Erzeugung eines jeweiligen Temperatursignals aufweist, der an die elektrische Verbindungseinrichtung (31) angeschlossen ist,
wobei die Temperaturmessmodule (23) über ihre jeweiligen elektrischen Anschlusseinrichtungen (25, 27) seriell zu einer Kette von variabler Länge verbindbar sind, **dadurch gekennzeichnet, dass** die Temperaturmessmodule (23) dazu ausgebildet sind, die jeweiligen Temperatursignale als Datensatz lediglich entlang einer gemeinsamen vorbestimmten Signalübertragungsrichtung zu übertragen, wobei der von einem der Temperaturmessmodule (23) übertragene jeweilige Datensatz das Temperatursignal oder die Temperatursignale dieses Temperaturmessmoduls (23) und das Temperatursignal oder die Temperatursignale der bezüglich der vorbestimmten Signalübertragungsrichtung vorangehenden Temperaturmessmodule (23) enthält, und wobei die Reihenfolge der Temperatursignale innerhalb des jeweiligen Datensatzes der Reihenfolge der Temperaturfühler (29) und der Reihenfolge der Temperaturmessmodule (23) entlang der Kette entspricht.

2. Temperaturmesssystem nach Anspruch 1,
**dadurch gekennzeichnet,**
**dass** der Temperaturfühler (29) in Temperaturaustausch mit der Umgebung steht.

3. Temperaturmesssystem nach einem der vorhergehenden Ansprüche, **dadurch gekennzeichnet,**
**dass** das jeweilige Temperaturmessmodul (23) mehrere Temperaturfühler (29) aufweist.

4. Temperaturmesssystem nach Anspruch 3,
**dadurch gekennzeichnet,**
**dass** die mehreren Temperaturfühler (29) voneinander beabstandet sind;
und/oder
**dass** das jeweilige Temperaturmessmodul (23) wenigstens drei Temperaturfühler (29) aufweist, die äquidistant voneinander beabstandet sind.

5. Temperaturmesssystem nach Anspruch 3 oder 4,
**dadurch gekennzeichnet,**
**dass** das jeweilige Temperaturmessmodul (23) eine Längsform besitzt, wobei die beiden elektrischen Anschlusseinrichtungen (25,27) an den beiden Enden der Längsform angeordnet sind, und wobei die mehreren Temperaturfühler (29) zwischen den beiden elektrischen Anschlusseinrichtungen (25,27) entlang der Längsform des jeweiligen Temperaturmessmoduls (23) verteilt angeordnet sind.

6. Temperaturmesssystem nach einem der Ansprüche 3 bis 5,
**dadurch gekennzeichnet,**
**dass** das jeweilige Temperaturmessmodul (23) dazu ausgebildet ist, die Temperatursignale der mehreren Temperaturfühler (29) als Datensatz entlang der elektrischen Verbindungseinrichtung (31) zu übertragen.

7. Temperaturmesssystem nach einem der vorhergehenden Ansprüche,
**dadurch gekennzeichnet,**
**dass** die erste elektrische Anschlusseinrichtung (25) des jeweiligen Temperaturmessmoduls (23) dazu geeignet ist, eine mechanische und elektrische Verbindung mit der zweiten elektrischen Anschlusseinrichtung (27) eines gleichartigen Temperaturmessmoduls (23) einzugehen, wobei die erste elektrische Anschlusseinrichtung (25) des jeweiligen Temperaturmessmoduls (23) jedoch nicht dazu geeignet ist, eine mechanische und elektrische Verbindung mit der ersten elektrischen Anschlusseinrichtung (25) eines gleichartigen Temperaturmessmoduls (23) einzugehen.

8. Temperaturmesssystem nach einem der vorhergehenden Ansprüche, **dadurch gekennzeichnet,**
**dass** die erste elektrische Anschlusseinrichtung (25) und die zweite elektrische Anschlusseinrichtung (27) jeweils einen Stecker oder eine Buchse oder einen Kabelfortsatz mit einem Stecker oder einen Kabelfortsatz mit einer Buchse aufweisen.

9. Temperaturmesssystem nach einem der vorhergehenden Ansprüche, **dadurch gekennzeichnet,**
**dass** die elektrische Verbindungseinrichtung (31) wenigstens eine Energieversorgungsleitung zur Versorgung des jeweiligen Temperaturmessmoduls (23) mit elektrischer Energie umfasst;
und/oder
**dass** die elektrische Verbindungseinrichtung (31) wenigstens eine Signalübertragungsleitung zur Übertragung der Temperatursignale umfasst.

10. Temperaturmesssystem nach einem der vorhergehenden Ansprüche, **dadurch gekennzeichnet,**
**dass** die elektrische Verbindungseinrichtung (31) für eine digitale serielle Signalübertragung ausgebildet ist.

11. Temperaturmesssystem nach einem der vorhergehenden Ansprüche, **dadurch gekennzeichnet,**
**dass** das jeweilige Temperaturmessmodul (23) mehrere Temperaturfühler (29) und eine gemeinsame Ausleseschaltung (33) aufweist, um die Temperatursignale der mehreren Temperaturfühler (29) auszulesen und an die elektrische Verbindungseinrichtung (31) des jeweiligen Temperaturmessmoduls (23) auszugeben.

12. Temperaturmesssystem nach einem der vorhergehenden Ansprüche, **dadurch gekennzeichnet,**
**dass** das jeweilige Temperaturmessmodul (23) des Temperaturmesssystems eine Längsform aufweist und an dem einen Ende der Längsform die erste elektrische Anschlusseinrichtung (25) und an dem anderen Ende der Längsform die zweite elektrische Anschlusseinrichtung (27) besitzt, wobei die erste elektrische Anschlusseinrichtung (25) eines Temperaturmessmoduls (23) des Temperaturmesssystems mit der zweiten elektrischen Anschlusseinrichtung (27) eines anderen Temperaturmessmoduls (23) des Temperaturmesssystems koppelbar ist.

13. Temperaturmesssystem nach einem der vorhergehenden Ansprüche, **gekennzeichnet**
**durch** ein Auswertemodul (37), das an ein Ende der Kette von Temperaturmessmodulen (23) anschließbar und dazu geeignet ist, die Temperatursignale sämtlicher Temperaturfühler (29) auszulesen.

## Claims

1. A temperature measurement system for refrigeration equipment (11), in which the cooling of goods takes place via cooled air (13), comprising a plurality of temperature measurement modules, wherein the respective temperature measurement module (23) has a first electrical connector device (25) and a second electrical connector device (27); wherein an electrical connection device (31) connects the first electrical connector device (25) and the second electrical connector device (27) to one another; and wherein the respective temperature measurement module (23) has at least one temperature sensor (29) for generating a respective temperature signal outside the two electrical connector devices (25, 27), said temperature sensor being connected to the electrical connection device (31),
wherein the temperature measurement modules (23) are connectable in series to form a chain of variable length via their respective electrical connector devices (25, 27), **characterized in that** the temperature measurement modules (23) are configured to transmit the respective temperature signals as a data record only along a common predetermined signal transmission direction, with the respective data record transmitted by one of the temperature measurement modules (23) including the temperature signal or the temperature signals of this temperature measurement module (23) and the temperature signal or the temperature signals of the temperature measurement modules (23) upstream with respect to the predetermined signal transmission direction, and with the order of the temperature signals within the respective data record corresponding to the order of the temperature sensors (29) and to the order of the temperature measurement modules (23) along the chain.

2. A temperature measurement system in accordance with claim 1, **characterized in that**
the temperature sensor (29) is in temperature exchange with the environment.

3. A temperature measurement system in accordance with one of the preceding claims,
**characterized in that**
the respective temperature measurement module (23) has a plurality of temperature sensors (29).

4. A temperature measurement system in accordance with claim 3, **characterized in that**
the plurality of temperature sensors (29) are spaced apart from one another;
and/or
**in that** the respective temperature measurement module (23) has at least three temperature sensors (29) which are spaced apart from one another equidistantly.

5. A temperature measurement system in accordance with claim 3 or claim 4,
**characterized in that**
the respective temperature measurement module (23) has an elongate shape, with the two electrical connector devices (25, 27) being arranged at the two ends of the elongate shape, and with the plurality of temperature sensors (29) being arranged distributed between the two electrical connector devices (25, 27) along the elongate shape of the respective temperature measurement module (23).

6. A temperature measurement system in accordance with any one of the claims 3 to 5,
**characterized in that**
the respective temperature measurement module (23) is configured to transmit the temperature signals of the plurality of temperature sensors (29) as a data record along the electrical connection device (31).

7. A temperature measurement system in accordance with any one of the preceding claims,
**characterized in that**
the first electrical connector device (25) of the respective temperature measurement module (23) is suitable to enter into a mechanical and electrical connection with the second electrical connector device (27) of a similar temperature measurement module (23), with the first electrical connector device (25) of the respective temperature measurement module (23), however, not being suitable to enter into a mechanical and electrical connection with the first electrical connector device (25) of a similar temperature measurement module (23).

8. A temperature measurement system in accordance with any one of the preceding claims,
**characterized in that**
the first electrical connector device (25) and the second electrical connector device (27) each have a plug or a socket or a cable prolongation comprising a plug or a cable prolongation comprising a socket.

9. A temperature measurement system in accordance with any one of the preceding claims,
**characterized in that**
the electrical connection device (31) comprises at least one energy supply line for supplying electrical energy to the respective temperature measurement module (23);
and/or
**in that** the electrical connection device (31) comprises at least one signal transmission line for transmitting the temperature signals.

10. A temperature measurement system in accordance with any one of the preceding claims,
**characterized in that**
the electrical connection device (31) is configured for a digital serial signal transmission.

11. A temperature measurement system in accordance with any one of the preceding claims,
**characterized in that**
the respective temperature measurement module (23) has a plurality of temperature sensors (29) and a common read-out circuit (33) in order to read out the temperature signals of the plurality of temperature sensors (29) and to output them to the electrical connection device (31) of the respective temperature measurement module (23).

12. A temperature measurement system in accordance with any one of the preceding claims,
**characterized in that**
the respective temperature measurement module (23) of the temperature measurement system has an elongate shape and has the first electrical connector device (25) at the one end of the elongate shape and has the second electrical connector device (27) at the other end of the elongate shape, with the first electrical connector device (25) of a temperature measurement module (23) of the temperature measurement system being couplable to the second electrical connector device (27) of another temperature measurement module (23) of the temperature measurement system.

13. A temperature measurement system in accordance with any one of the preceding claims,
**characterized**
**by** an evaluation module (37) which is connectable to an end of the chain of temperature measurement modules (23) and which is suitable to read out the temperature signals of all the temperature sensors (29).

## Revendications

1. Système de mesure de la température pour un meuble frigorifique (11) dans lequel le refroidissement de marchandises s'effectue par de l'air refroidi (13), comportant plusieurs modules de mesure de température, dans lequel
le module de mesure de température respectif (23) comprend un premier moyen de raccordement électrique (25) et un second moyen de raccordement électrique (27), un premier moyen de connexion électrique (31) reliant le premier moyen de raccordement électrique (25) et le second moyen de raccordement électrique (27) l'un à l'autre, et
à l'extérieur des deux moyens de raccordement électriques (25, 27), le module de mesure de température respectif (23) comprend au moins un capteur de température (29) pour générer un signal de température respectif, qui est raccordé au moyen de connexion électrique (31),
les modules de mesure de température (23) sont susceptibles d'être reliés en série en une chaîne de longueur variable via leurs moyens de raccordement électriques respectifs (25, 27),
**caractérisé en ce que**
les modules de mesure de température (23) sont réalisés pour transmettre les signaux de température respectifs sous la forme d'un ensemble de données uniquement le long d'une direction de transmission de signaux prédéterminée commune,
l'ensemble de données respectif transmis par l'un des modules de mesure de température (23) comprend le signal de température ou les signaux de température de ce module de mesure de température (23) et le signal de température ou les signaux de température des modules de mesure de température (23) précédents par rapport à la direction de transmission de signaux prédéterminée, et
l'ordre des signaux de température à l'intérieur de l'ensemble de données respectif correspond à l'ordre des capteurs de température (29) et à l'ordre des modules de mesure de température (23) le long de la chaîne.

2. Système de mesure de température selon la revendication 1,
**caractérisé en ce que**
le capteur de température (29) est en échange thermique avec l'environnement.

3. Système de mesure de température selon l'une des revendications précédentes,
**caractérisé en ce que**
le module de mesure de température respectif (23) comprend plusieurs capteurs de température (29).

4. Système de mesure de température selon la revendication 3,
**caractérisé en ce que**
les plusieurs capteurs de température (29) sont espacés les uns des autre ; et/ou
le module de mesure de température respectif (23) comprend au moins trois capteurs de température (29) qui sont espacés de façon équidistante les uns des autres.

5. Système de mesure de température selon la revendication 3 ou 4,
**caractérisé en ce que**
le module de mesure de température respectif (23) possède une forme allongée, les deux moyens de raccordement électriques (25, 27) étant agencés aux deux extrémités de la forme allongée et les plusieurs capteurs de température (29) étant agencés en répartition le long de la forme allongée du module de mesure de température respectif (23) entre les deux moyens de raccordement électriques (25, 27).

6. Système de mesure de température selon l'une des revendications 3 à 5,
**caractérisé en ce que**
le module de mesure de température respectif (23) est réalisé pour transmettre les signaux de température des plusieurs capteurs de température (29) sous la forme d'un ensemble de données le long du moyen de connexion électrique (31).

7. Système de mesure de température selon l'une des revendications précédentes,
**caractérisé en ce que**
le premier moyen de raccordement électrique (25) du module de mesure de température respectif (23) est apte à établir une liaison mécanique et électrique avec le second moyen de raccordement électrique (27) d'un module de mesure de température (23) de même type, le premier moyen de raccordement électrique (25) du module de mesure de température respectif (23) n'étant cependant pas apte à établir une liaison mécanique et électrique avec le premier moyen de raccordement électrique (25) d'un module de mesure de température (23) de même type.

8. Système de mesure de température selon l'une des revendications précédentes,
**caractérisé en ce que**
le premier moyen de raccordement électrique (25) et le second moyen de raccordement électrique (27) présentent chacun une fiche mâle ou une fiche femelle ou un prolongement de câble pourvu d'une fiche mâle ou un prolongement de câble pourvu d'une fiche femelle.

9. Système de mesure de température selon l'une des revendications précédentes,
**caractérisé en ce que**
le moyen de connexion électrique (31) comprend au moins une ligne d'alimentation en énergie pour alimenter le module de mesure de température respectif (23) en énergie électrique ;
et/ou
le moyen de connexion électrique (31) comprend au moins une ligne de transmission de signaux pour transmettre les signaux de température.

10. Système de mesure de température selon l'une des revendications précédentes,
**caractérisé en ce que**
le moyen de connexion électrique (31) est réalisé pour une transmission de signaux numérique en série.

11. Système de mesure de température selon l'une des revendications précédentes,
**caractérisé en ce que**
le module de mesure de température respectif (23) comprend plusieurs capteurs de température (29) et un circuit de lecture commun (33) pour lire les signaux de température des plusieurs capteurs de température (29) et pour les émettre au moyen de connexion électrique (31) du module de mesure de température respectif (23).

12. Système de mesure de température selon l'une des revendications précédentes,
**caractérisé en ce que**
le module de mesure de température respectif (23) du système de mesure de température présente une forme allongée et possède à l'une des extrémités de la forme allongée le premier moyen de raccordement électrique (25) et à l'autre extrémité de la forme allongée le second moyen de raccordement électrique (27), le premier moyen de raccordement électrique (25) d'un module de mesure de température (23) du système de mesure de température pouvant être couplé au second moyen de raccordement électrique (27) d'un autre module de mesure de température (23) du système de mesure de température.

13. Système de mesure de température selon l'une des revendications précédentes,
**caractérisé par**
un module d'évaluation (37) qui peut être raccordé à une extrémité de la chaîne de modules de mesure de température (23) et qui est apte à lire les signaux de température de tous les capteurs de température (29).
